# EUROPEAN PATENT SPECIFICATION

(11) **EP 0 879 938 B1**
(45) Date of publication and mention of the grant of the patent: **09.08.2006**
(21) Application number: 98109198.6
(22) Date of filing: 20.05.1998
(51) Int. Cl.: F01N 3/02

(54) **A device for purifying the exhaust gas of an internal combustion engine**
Vorrichtung zum Reinigen des Abgases einer Verbrennungskraftmaschine
Dispositif de purification des gaz d'échappement d'un moteur à combustion interne

(30) Priority: 22.05.1997 JP 13262697; 21.01.1998 JP 975798
(43) Date of publication of application: 25.11.1998
(73) Proprietor: Toyota Jidosha Kabushiki Kaisha, Toyota-shi, Aichi-ken, 471-8571 (JP)
(72) Inventor: Watanabe, Yoshimasa, Toyota-shi, Aichi-ken (JP); Henda, Yoshimitu, Toyota-shi, Aichi-ken (JP); Araki, Yasushi, Toyota-shi, Aichi-ken (JP)
(74) Representative: TBK-Patent

(56) References cited:
- US-A- 4 659 348
- PATENT ABSTRACTS OF JAPAN vol. 009, no. 117 (M-381), 22 May 1985 (1985-05-22) -& JP 60 003420 A (NISSAN JIDOSHA KK), 9 January 1985 (1985-01-09)

## Description

### BACKGROUND OF THE INVENTION

### 1. Field of the Invention

The present invention relates to a device for purifying the exhaust gas of an internal combustion engine.

### 2. Description of the Related Art

Exhaust gas from an internal combustion engine contains harmful particulates, mainly composed of carbon, which must be removed and not discharged into the atmosphere. For this purpose, it is suggested that a particulate trap is provided in an exhaust system of an engine. Since such a particulate trap causes a large exhaust gas flow resistance as the amount of trapped particulates increases, it is necessary to periodically burn the trapped particulates so that the particulate trap is regenerated.

Such a particulate trap regeneration generally uses the hot exhaust gas generated in a high engine load and high engine speed operation so that the particulate trap is regenerated every time this engine operation occurs. However, it is not certain that the high engine load and high engine speed operation will be frequently carried out, so that the particulate trap can trap a large amount of particulate before it is regenerated. The trapped particulates burn from the exhaust gas upstream side of the particulate trap to the exhaust gas downstream side thereof, so that the combustion heat converges on the downstream portion of the particulate trap. Therefore, when an amount of trapped particulates is larger than a given amount, the entire combustion heat becomes very large so that the downstream portion of the particulate trap on which the combustion heat converges can melt due to the heat.

US-A-4 659 348 discloses a device for purifying the exhaust gas on an internal combustion engine comprising: particulate trapping means which have many trap passages for allowing a large amount of exhaust gas to pass there through; and communicating means which have many communicating passages for allowing a large amount of exhaust gas to pass there through; the particulate trapping means and the communicating means being arranged in parallel in the exhaust passage of the engine, a passage resistance of the communicating passage being higher than that of the trap passage, the filters and the communicating means consist of cell type filters, wherein each trap passage of the particulate trapping means has a trap wall which extends longitudinally as at least one of side walls thereof and through which the exhaust gas passes.

Japanese Unexamined Patent Publication (Kokai) No. 60-65219 discloses a particulate trap which is divided into two portions along the longitudinal axis and has a gap therebetween. In this particulate trap, when a given amount of particulates is trapped and the exhaust gas flow resistance increases largely, the exhaust gas passes mainly through the gap in the particulate trap and, thereafter the particulate is not trapped herein. Thus, in this particulate trap, an amount of trapped particulate can be limited to the given amount so that the melting of the particulate trap does not occur.

A general particulate trap is constructed by many trap passages which have a trap wall extending longitudinally as at least one of side walls thereof. Therefore, the entire area of the trap walls for trapping the particulates is made large. In such a particulate trap, a passage resistance of each trap passage is necessarily high but all the trap passages allow a large amount of exhaust gas to pass therethrough.

In the above-mentioned particulate trap, the passage resistance of the gap thereof must be very low such that a large amount of exhaust gas can pass through the gap after the given amount of particulate is trapped in the particulate trap. Accordingly, when no particulate is trapped in the particulate trap, the exhaust gas passes easily through the gap rather than the trap passages. Therefore, in the particulate trap, the trap efficiency is very low before the given amount of particulate is trapped.

### SUMMARY OF THE INVENTION

Therefore, the object of the present invention is to provide a device for purifying the exhaust gas of an internal combustion engine, which has a high trap efficiency before a given amount of particulate is trapped and can limit the amount of trapped particulate.

This object is solved with a device for purifying the exhaust gas of an internal combustion engine according to claim 1. Further advantageous developments of the invention are defined in the subclaims

The present invention will be more fully understood from the description of preferred embodiments of the invention set forth below, together with the accompanying drawings.

### BRIEF DESCRIPTION OF THE DRAWINGS

In the drawings:
Fig. 1 is a sectional view showing a device for purifying the exhaust gas of an internal combustion engine according to a first embodiment of the present
Fig. 2 is a longitudinal sectional view of a particulate trap used in the device of Fig. 1;
Fig. 3 is an enlarged partially sectional view taken along the line (A)-(A) in Fig. 2;
Fig. 4 is a longitudinal sectional view of another particulate trap used in the device of Fig. 1;
Fig. 5 is an enlarged partially view seen from the arrow (B) in Fig. 4;
Fig. 6 is a sectional view showing another device for purifying the exhaust gas of an internal combustion engine;
Fig. 7 is a longitudinal sectional view of a particulate trap used in the device of Fig. 6;
Fig. 8 is an enlarged partially sectional view taken along the line (C)-(C) in Fig. 7;
Fig. 9 is a longitudinal sectional view of another particulate trap used in the device of Fig. 6;
Fig. 10 is an enlarged partially view seen from the arrow (D) in Fig. 9;
Fig. 11 is a longitudinal side view of another particulate trap used in the device of Fig. 6;
Fig. 12 is a longitudinal side view of another particulate trap used in the device of Fig. 6;
Fig. 13 is a longitudinal enlarged partially sectional view of another particulate trap used in the device of Fig. 6;
Fig. 14 is a view seen from the arrow (E) in Fig. 13;
Fig. 15 is a longitudinal sectional view of another particulate trap used in the device of Fig. 6;
Fig. 16 is a longitudinal enlarged partially sectional view of another particulate trap used in the device of Fig. 6 which is a subject- matter of the invention;
Fig. 17 is an enlarged partially view seen from the arrow (F) in Fig. 16 which is a subject- matter of the invention;
Fig. 18 is a longitudinal enlarged partially sectional view of another particulate trap used in the device of Fig. 6 which is a subject- matter of the invention;
Fig. 19 is an enlarged partially sectional view taken along the line (G)-(G) in Fig. 18;
Fig. 20 is a longitudinal enlarged partially sectional view of another particulate trap used in the device of Fig. 6 which is a subject- matter of the invention;
Fig. 21 is a view seen from the arrow (H) in Fig. 20;
Fig. 22 is a longitudinal enlarged partially sectional view of another particulate trap used in the device of Fig. 6 which is a subject- matter of the invention,
Fig. 23 is a view seen from the arrow (I) in Fig. 22;
Fig. 24 is an enlarged view of the portion (J) in Fig. 18;
Fig. 25 is a view showing the state in which an agglomerate of particulates adheres on the layer of hydrocarbon absorbent; and
Fig. 26 is a view showing the state in which an agglomerate of particulates adheres on the inside wall surface of the communicating passage.

### DESCRIPTION OF THE PREFERRED EMBODIMENT

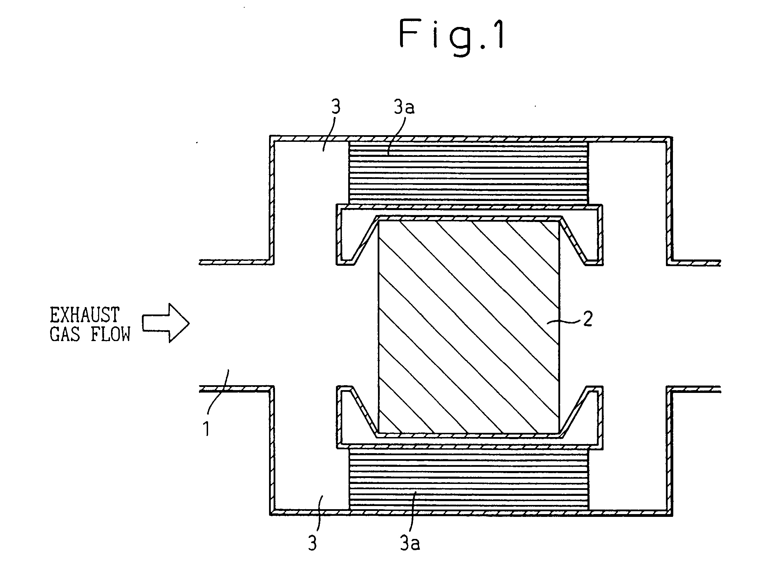

Fig. 1 is a sectional view showing a device for purifying the exhaust gas of an internal combustion engine.

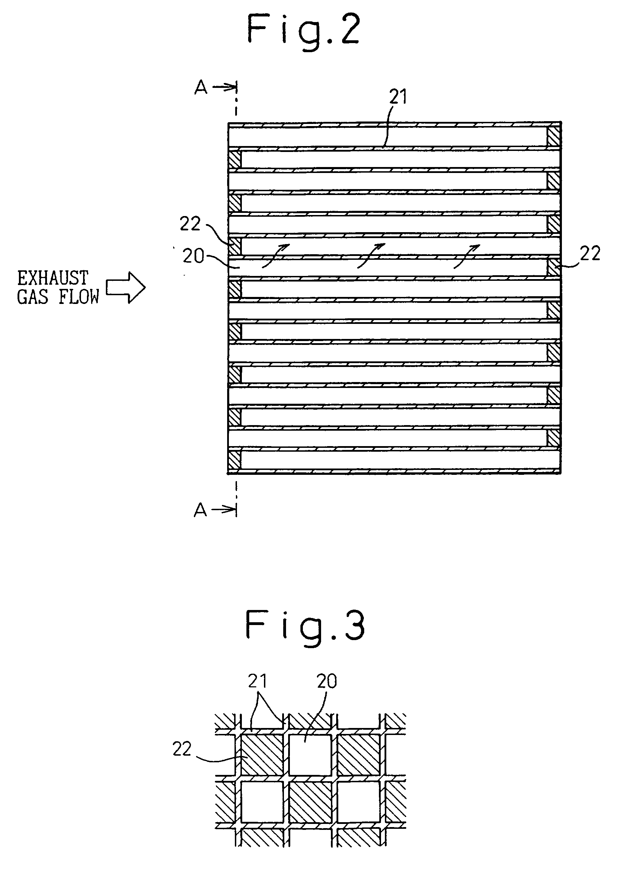

In this figure, reference numeral 1 designates an exhaust passage, and reference numeral 2 designates a particulate trap. The particulate trap 2 is made from, for example, a porous material such as a ceramic, as shown in Fig. 2 and Fig. 3 which is an enlarged partially sectional view taken along the line (A)-(A) in Fig. 2. The porous material particulate trap has many longitudinal spaces which are subdivided by partition walls 21 extending longitudinally. In two longitudinal spaces which are adjacent each other, blocking members 22 made from a ceramic block are arranged at the exhaust gas upstream side of one longitudinal space and at the exhaust gas downstream side of the other longitudinal space. Thus, the two longitudinal spaces which are adjacent each other become a trap passage 20 in which the exhaust gas flows via the partition wall 21 from the upstream side to the downstream side. The partition wall 21 made from a porous material traps the particulates as a trap wall when the exhaust gas passes therethrough.

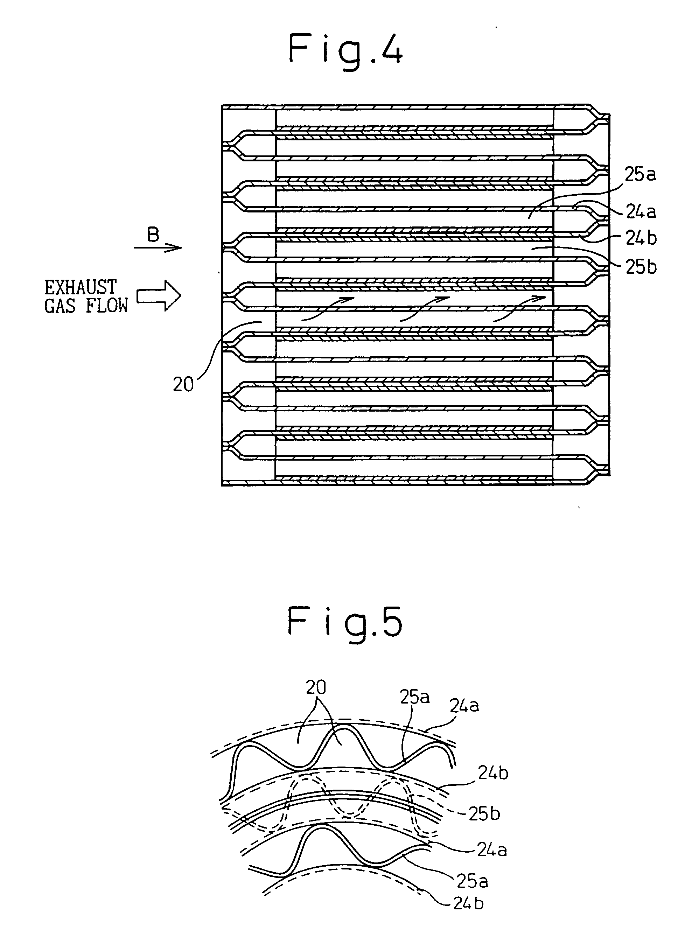

The particulate trap 2 may be a metallic fiber particulate trap which is constructed of heat-durable metallic fiber nonwoven sheets and heat-durable metal corrugated plates, as shown in Fig. 4 and Fig. 5 which is an enlarged partial view seen from the arrow (B). The particulate trap is constructed by a pair of nonwoven sheets 24a, 24b and a pair of corrugated plates 25a, 25b alternately overlaid with each other in the thickness direction in a spiral manner, and has many longitudinal spaces between the nonwoven sheets and the corrugated plates. The heat-durable metallic fiber composing the nonwoven sheet and the metal forming the corrugated plate may be an alloy of Fe-Cr-Al or Ni-Cr-Al. In the two nonwoven sheets 24a, 24b, one surface of one nonwoven sheet and one surface of the other sheet are in close contact, and are continuously welded, with each other along the upstream edges thereof, and the other surface of one nonwoven sheet and the other surface of the other nonwoven sheet are in close contact, and continuously welded, with each other along the downstream edges thereof. Thus, the two longitudinal spaces which are radially adjacent to each other become a trap passage 20 in which the exhaust gas flows via the nonwoven sheet from tho upstream side to the downstream side. The nonwoven sheet traps the particulates as a trap wall when the exhaust gas passes therethrough. The two-type particulate traps allow a large amount of exhaust gas to pass through the many trap passages formed therein.

In Fig. 1, reference numeral 3 is a communicating pipe which communicates between the upstream and the downstream of the particulate trap 2 in the exhaust passage 1. In the communicating pipe 3, many fine pipes 3a are closely arranged. In the present embodiment, two communicating pipes 3 are provided so that a large amount of exhaust gas can bypass the particulate trap 2.

A passage resistance of each trap passage 20 of the particulate trap 2 has an entrance resistance component produced when the exhaust gas flows into the upstream opening of the trap passage, a flow resistance component produced when the exhaust gas flows therethrough, and a passing resistance component produced when the exhaust gas passes through the trap wall. On the other hand, a passage resistance of each fine pipe 3a arranged in the communicating passage 3 has an entrance resistance component and a flowing resistance component, because each fine pipe 3a has no trap wall. General speaking, the smaller an upstream opening area of a passage is, the higher the entrance resistance component thereof becomes, so that the passage resistance thereof increases. The smaller a section area of a passage is and the longer a length thereof is, the higher the flowing resistance component thereof becomes, so that the passage resistance thereof increases.

In the present example, the upstream opening area and the section area of each fine pipe 3a are very small, in comparison with those of each trap passage 20. Therefore, the passage resistance of each fine pipe 3a does not have a passing resistance component but it is higher than the passage resistance of each trap passage 20. The length of the fine pipe 3a is longer than that of the trap passage 20. This is one factor to make the passage resistance of the fine pipe 3a higher than that of the trap passage 20.

In the device for purifying the exhaust gas of the present embodiment, at first, the exhaust gas flows only through each trap passage 20 of which passage resistance is relatively low, and thus the particulates are satisfactorily trapped by each trap wall. The trapping of the particulates continues and the particulate trap 2 is regenerated by the hot exhaust gas when a high engine load and high engine speed operation is carried out. If the high engine load and high engine speed operation is not carried out for some time, an amount of trapped particulates increases so that the passage resistance of each trap passage 20 becomes relatively high and is slightly over that of each fine pipe 3a.

As mentioned above, the two communicating pipes 3 allow a large amount of exhaust gas to pass therethrough. Accordingly, after the passage resistance of each trap passage 20 becomes higher than that of each fine pipe 3a, the exhaust gas flows only through each fine pipe 3a in the communicating pipes 3, of which passage resistance is relatively low, and thus additional particulates are not trapped and an amount of trapped particulates can be limited to a given amount. At this time, even if a high engine load and high engine speed operation is carried out, the exhaust gas does not pass through the particulate trap 2. However, the exhaust gas gives heat to the upstream end of the particulate trap 2 so that the trapped particulates can start to burn satisfactorily. In this particulate combustion, the amount of particulates trapped in the particulate trap 2 is limited to a given amount so that the downstream portion of the particulate trap 2 does not melt due to the combustion heat. Thus, if the regeneration of the particulate trap 2 is finished, the passage resistance of each trap passage 20 becomes lower than that of each fine pipe 3a again. Therefore, the exhaust gas flows only through each trap passage 20 and the trapping of the particulates starts again.

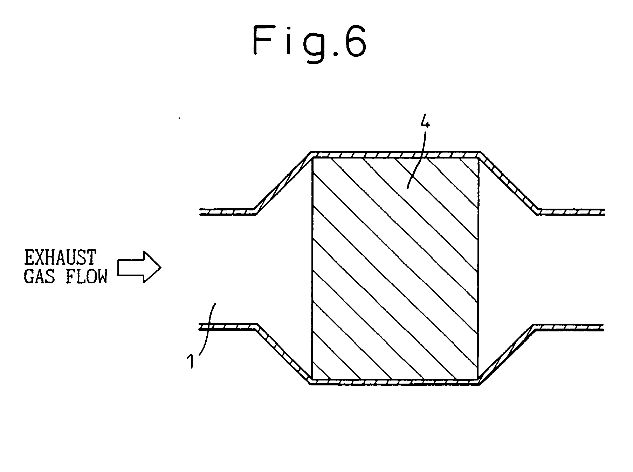

Fig. 6 is a sectional view showing another device for purifying the exhaust gas of an internal combustion engine.

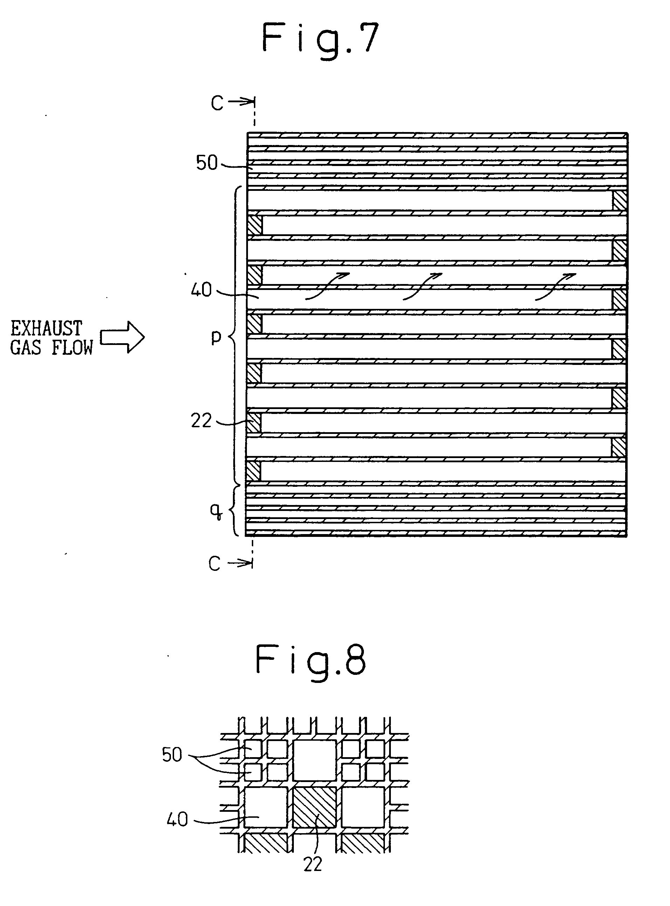

In this figure, reference numeral 1 designates an exhaust passage, and reference numeral 4 designates a particulate trap. In the present example, a communicating pipe 3 as in the first embodiment is not provided. The particulate trap 4 is, for example, a porous material particulate trap, as shown in Fig. 7 and Fig. 8 which is an enlarged sectional view taken along the line C-C in Fig. 7. Only the differences between this particulate trap and the porous material particulate trap shown in Fig. 2 are explained as follows.

In this particulate trap, the trap passage 40 is formed by the two longitudinal spaces which are adjacent to each other at the central portion thereof, as the porous material particulate trap of Fig. 2. However, at the peripheral portion thereof, the section area of each longitudinal space is smaller than that at the central portion. No blocking at the upstream and the downstream sides thereof is carried out so that many communicating passages 50 are formed. Thus, in this particulate trap, the central portion becomes a particulate trapping means region (p) corresponding to the particulate trap 2 of the first embodiment, and the peripheral portion becomes a communicating means region (q) corresponding to the communicating pipes 3 of the first embodiment. The particulate trapping means allows a large amount of exhaust gas to pass through many trap passages 40, and the communicating means also allows a large amount of exhaust gas to pass through many communicating passages 50. Since the upstream opening area and the section area of each communicating passage 50 is made very small respectively, in comparison with those of each trap passage 40, the passage resistance of each communicating passage 50 becomes higher than that of each trap passage 40.

When such a particulate trap is arranged in the exhaust passage 1, at first, the exhaust gas flows only through each trap passage 20 of which passage resistance is relatively low, as the first embodiment, and thus the particulates are satisfactorily trapped in the particulate trapping means. When an amount of trapped particulates increases, the passage resistance of each trap passage 40 becomes relatively high and is slightly over that of each communicating passage 50. Thereafter, the exhaust gas flows only through each communicating passage 50 of which passage resistance is relatively low, and thus an amount of trapped particulates can be limited to a given amount. At this time, the hot exhaust gas in the high engine load and high engine speed operation flows through the communicating means. However, the communicating means is arranged closely around the particulate trapping means so that the hot exhaust gas gives heat to the particulate trapping means and thus the trapped particulates can start to burn satisfactorily in the particulate trapping means.

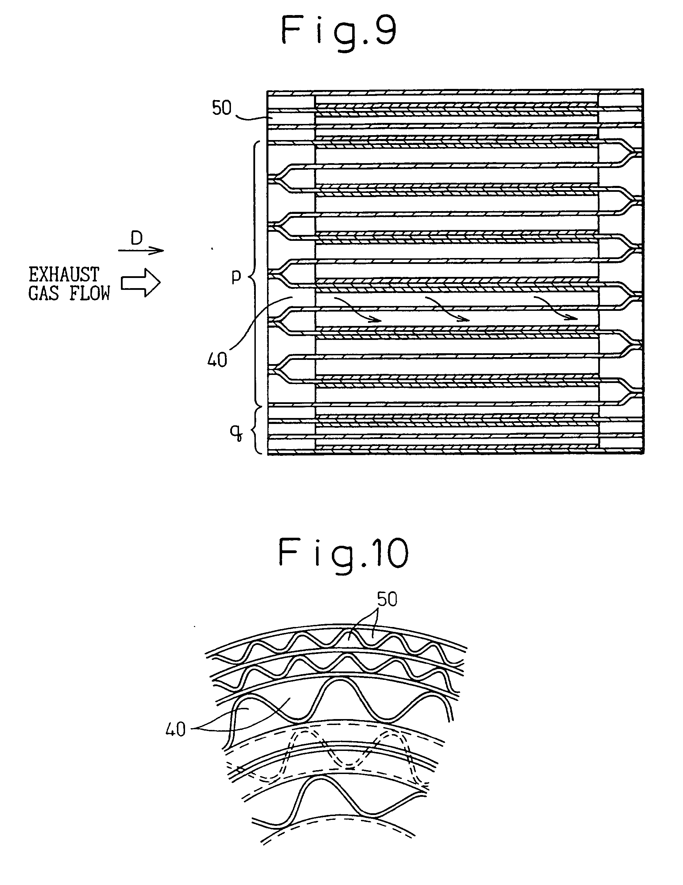

The particulate trap 4 may be a metallic fiber particulate trap as shown in Fig. 9 and Fig. 10 which is an enlarged partial view seen from the arrow (D) in Fig. 9. The differences between this particulate trap and the metallic fiber particulate trap shown in Fig. 4 are explained as follows. In this particulate trap, the trap passage 40 is formed by the two longitudinal spaces which are adjacent each other at the central portion thereof, as the metallic fibers particulate trap shown in Fig. 4. However, at the peripheral portion thereof, the section area of each longitudinal space is made small by a small corrugated plate which has small corrugations. No welding between the nonwoven sheets at upstream and downstream sides is carried out so that many communicating passages 50 are formed. Thus, in also this particulate trap, the central portion becomes a particulate trapping means region (p) and the peripheral portion becomes a communicating means region (q). The particulate trapping means allows a large amount of exhaust gas to pass through many trap passages 40, and the communicating means also allows a large amount of exhaust gas to pass through many communicating passages 50. The passage resistance of each communicating passage 50 becomes higher than that of each trap passage 40. When such a particulate trap is arranged in the exhaust passage 1, the effects as above-mentioned can be obtained.

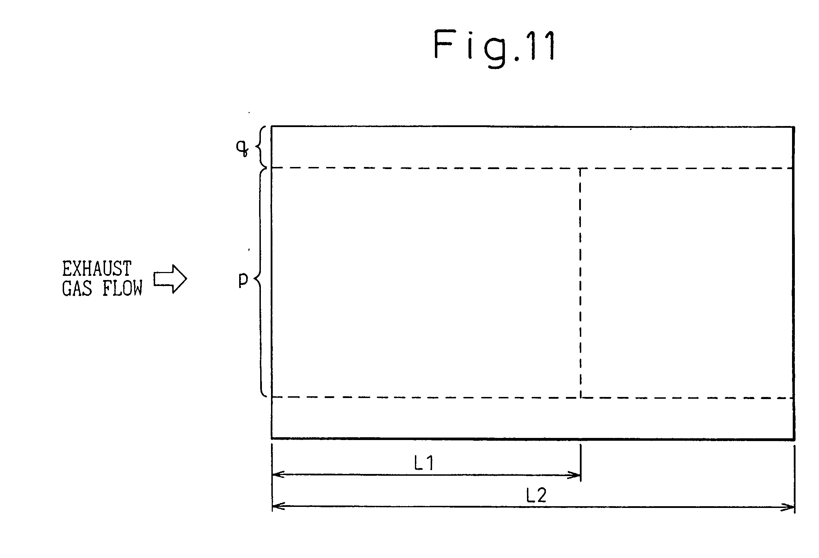

The particulate trap 4 of the present example may be a particulate trap as shown in Fig. 11. The particulate trap is a porous material particulate trap or a metallic fiber particulate trap, which has the particulate trapping means region (p) and the communicating means region (q) as shown in Fig. 7 or Fig. 9, and in which the trap passages are formed at the central particulate trapping means region (p) and the communicating passages are formed at the peripheral communicating means region (q). The length of the particulate trapping means region (p) is (L1), and the length of the communicating means region (q) is (L2) which is longer than (L1), since the communicating means region (q) projects to the exhaust gas downstream direction. Therefore, in the present example, the flowing resistance component of each communicating passage in the communicating means increases and thus the passage resistance of each communicating passage increases, in comparison with the particulate trap shown in Fig. 7 or Fig. 9.

Even if the sectional area of each trap passage in the particulate trapping means increases, the passage resistance thereof cannot be made very low since the passing resistance component thereof is dominant. On the other hand, the passage resistance of each communicating passage in the communicating means cannot freely be made high since there is a production limit on making the upstream opening area and the section area thereof small. However, if the lengths of the communicating passages are made large, the passage resistance of each communicating passage can freely be made high. Therefore, the difference between the passage resistance of each communicating passage and the passage resistance of each trap passage which cannot be made very low can freely be made large. Thus, if the particulate trap means melts hardly with the heat to have a high heat- durable, an amount of trapped particulates which is limited can be made relative large. This reduces the chance of the amount of trapped particulates becoming the limit amount, i.e., the exhaust gas passing through the communicating passages, and thus the amount of particulate discharged into the atmosphere can be decreased.

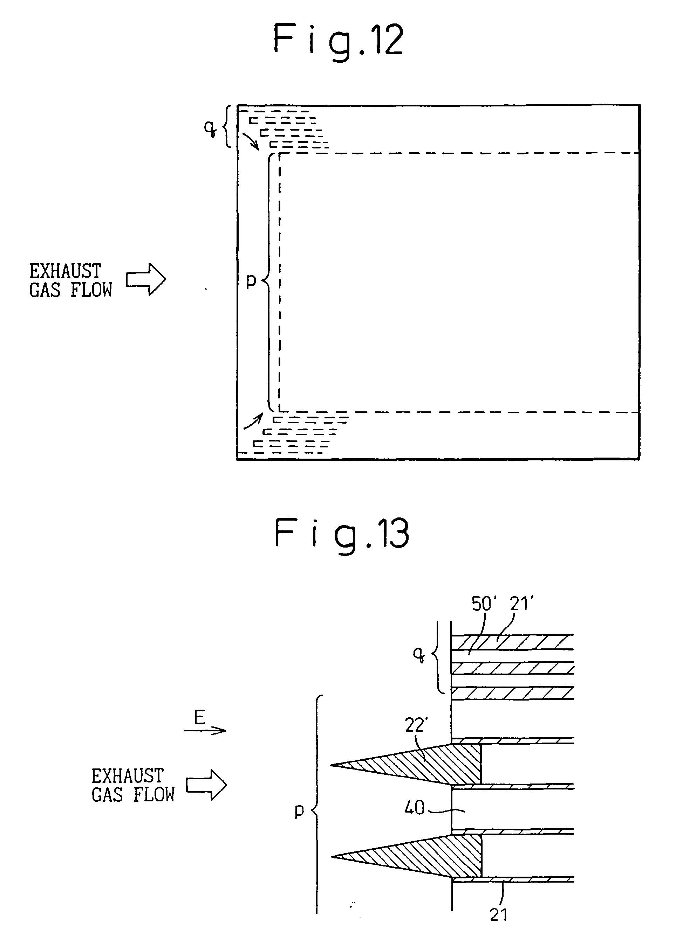

The particulate trap 4 of the present example may be a particulate trap as shown in Fig. 12. The particulate trap is a porous material particulate trap or a metallic fiber particulate trap, which has the particulate trapping means region (p) and the communicating means region (q) as shown in Fig. 7 or Fig. 9, and in which the trap passages are formed at the central particulate trapping means region (p) and the communicating passages are formed at the peripheral communicating means region (q). The further away the communicating passage of the communicating means region (q) is, outwardly from the particulate trapping means region (p), the more the communicating passage projects in the exhaust gas upstream direction. Therefore, the length of the communicating passage is made large so that the passage resistance thereof becomes high. Moreover, in the exhaust passage immediately upstream of the particulate trap, the passage resistance of a part thereof facing the particulate trap means region (p) becomes very low, in comparison with a part thereof facing the communicating means region, and thus the exhaust gas flows as shown in the arrow, i.e., the exhaust gas hardly flows into the communicating passages. Accordingly, the difference between the passage resistances of each communicating passage and of each trap passage can freely be made large so that the limit amount of trapped particulates can be made relative large.

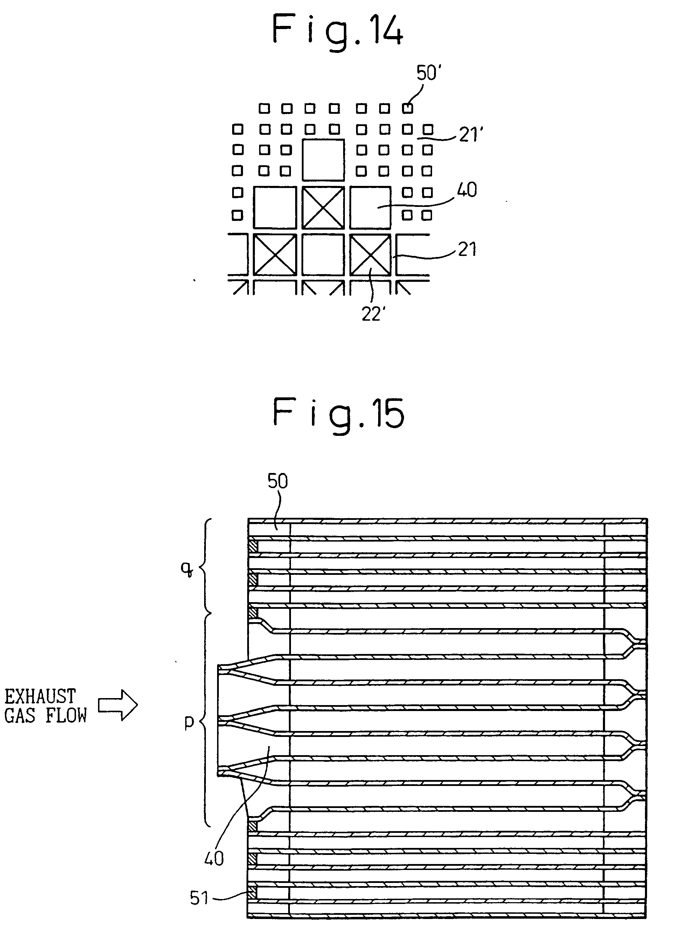

The particulate trap 4 of the present example may be a particulate trap as shown in Fig. 13 and Fig. 14 which is a view seen from the arrow (E) in Fig. 13. Fig. 13 is an enlarged sectional view in the vicinity of the boundary between the particulate trapping means region (p) and the communicating means region (q) of a porous material particulate trap as shown in Fig. 7. In the particulate trap, the blocking member 22' for forming the trap passage is a quadrangular pyramid shape and projects in the exhaust gas upstream direction. In the prior art, the exhaust gas flow impinges on the upstream side flat surface of the blocking member and becomes turbulent so that the exhaust gas hardly flows into the upstream opening of the trap passages. However, since the blocking member 22' has a quadrangular pyramid shape, turbulent flows are hardly produced so that the exhaust gas flows smoothly into the trap passages 40, i.e., the entrance resistance component of each trap passage 40 decreases and the passage resistance thereof can be made low. Therefore, the difference between the passage resistances of each communicating passage 50' and of the trap passage 40 can be made large.

Moreover, the thickness of the partition walls 21' which form the communicating passages 50' at the communicating means region (q) is thicker than that of the partition walls 21 which form the trap passages 40 at the particulate trapping means region (p), so that the upstream opening area and the section area of the communicating passage 50' is smaller than that in the particulate trap shown in Fig. 7. Thus, the passage resistance of each communicating passage 50' becomes high and the exhaust gas impinges on the thicker partition walls so that it hardly flows into the communicating passages 50', i.e., the entrance resistance component of each communicating passage 50' increases. Therefore, the passage resistance of each communicating passage 50' can be made high and thus the difference between the passage resistances of each communicating passage and of the trap passages can be made large.

If the blocking member shape is made a cone or a pyramid, the turbulent flows can hardly be produced. In case of the present particulate trap, four upstream openings of four trap passages 40 are provided in the four directions around one blocking member 22' so that the quadrangular pyramid shape is selected as the blocking member shape to lead the exhaust gas into the four upstream openings. In the basis of this idea, a blocking member shape is preferably selected from among multi-angular pyramid shapes according to the arrangement of the trap passages.

The particulate trap 4 of the present example may be a particulate trap as shown in Fig. 15. The particulate trap is a metallic fiber particulate trap as shown in Fig. 9. The bending portions of the metallic fiber nonwoven sheets are welded each other to form the trap passages 40 at the particulate trapping means region (p). The bending portions are made long and project in the exhaust gas upstream direction so that the welded bending portions shape becomes a smooth tapering shape. Therefore, similar to the quadrangular pyramid blocking member, the exhaust gas flows easily into the trap passages 40. In the exhaust gas upstream side of the communicating means region (q), a spiral blocking member 51 is arranged between one surface of one nonwoven sheet and one surface of the other nonwoven sheet, which surfaces are welded to each other in the particulate trapping means region. Therefore, the exhaust gas impinges on the blocking member and becomes a turbulent flow so that it hardly flows into the communicating passages 50. Thus, similar to the particulate trap shown in Fig. 13, the difference between the passage resistances of each communicating passage 50 and of each trap passage 40 can be made large.

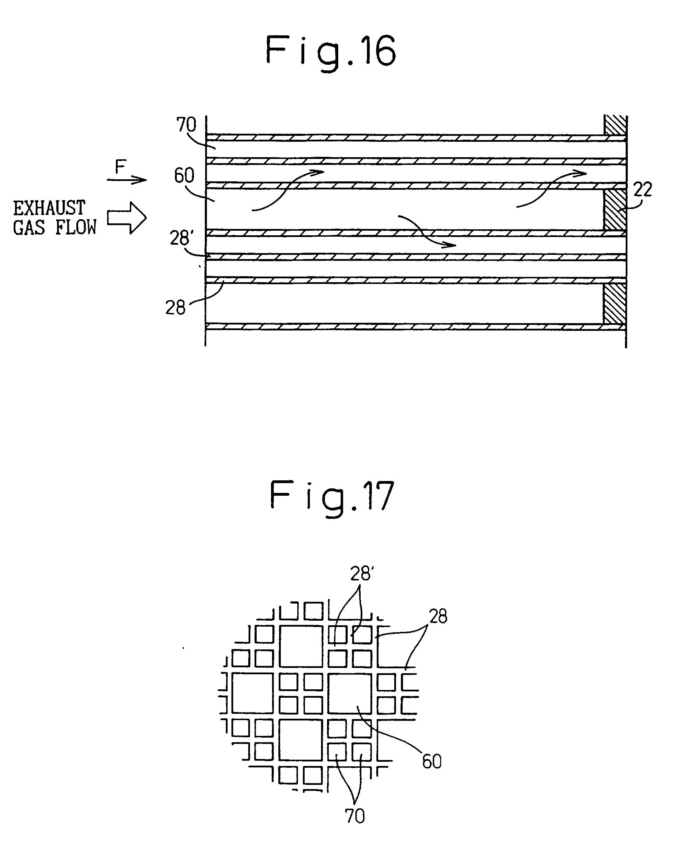

The particulate trap 4 according to an embodiment of the present invention may be a porous material particulate trap as shown in Fig. 16 and Fig. 17 which is a view seen from the arrow (F). Fig. 16 is an enlarged partially sectional view of the porous material particulate trap. In the particulate trap, many longitudinal spaces are subdivided by the porous material partition walls 28 and the alternate longitudinal spaces are subdivided by the partition walls 28'. The blocking member 22 is arranged at the exhaust gas downstream side of the longitudinal spaces which are not subdivided by the partition walls 28'. Thus, the longitudinal spaces blocked by the blocking member 22 become the trap passages 60 and the longitudinal spaces subdivided by the partition walls 28' become the communicating passages 70 which are adjacent to the trap walls of the trap passages 60.

The trap passage 60 is different from the abovementioned trap passage which has the upstream and downstream portions on the trap wall, and has only the upstream portion from the trap wall (the partition wall 28). In the trap passage, the exhaust gas flows out from the communicating passages 70 after it passes through the trap wall. Accordingly, the flowing resistance components of each trap passage 60 and of each communicating passage 70 are almost equal. To make the passage resistance of each trap passage 60 smaller than that of each communicating passage 70, the entrance resistance component of each trap passage 60 must be lower than the entrance resistance component of each communicating passage 70 such that the difference therebetween is larger than the passing resistance component of the each trap wall. This can be realized by the difference between the upstream opening areas of the trap passage and of the communicating passage as shown in Figs. 16 and 17. The particulate trap which has the particulate trapping means and the communicating means separately, necessarily becomes a relative large size, to allow a large amount of exhaust gas to flow through each of the particulate trapping means and the communicating means, respectively. However, the present particulate trap which uses a part (in the present case, the downstream portion from the trap wall) of the trap passage 60 as the communicating passage does not need to become large in size.

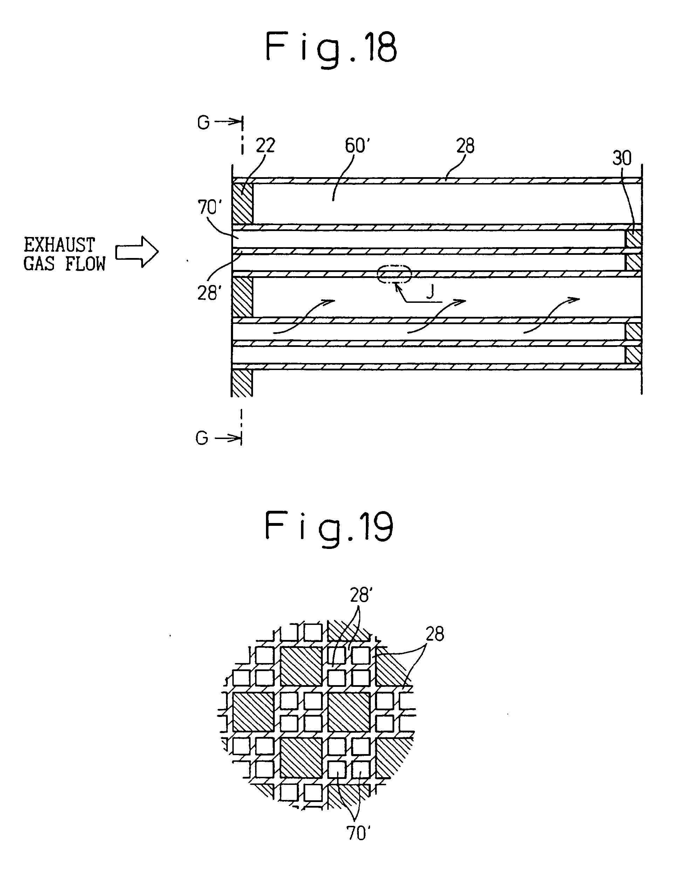

The particulate trap 4 according to another embodiment of the present invention may be a porous material particulate trap as shown in Fig. 18 and Fig. 19 which is a sectional view taken along the line (G)-(G) in Fig. 18. Fig. 18 is an enlarged partially sectional view of the porous material particulate trap. In the particulate trap, many longitudinal spaces are subdivided by the partition walls 28 and the alternate longitudinal spaces are subdivided by the partition walls 28', similar to the particulate trap shown in Fig. 16. The blocking member 22 is arranged at the exhaust gas upstream side of the longitudinal spaces which are not subdivided by the partition walls 28'. Thus, the longitudinal spaces blocked by the blocking member 22 become the trap passages 60'.

Reference numeral 30 designates a mesh member that has very large meshes. The mesh member 30 is arranged at the exhaust gas downstream side of the longitudinal spaces which are subdivided by the partition walls 28'. However, the longitudinal spaces subdivided by the partition walls 28' substantially become the communicating passages 70' which are adjacent to the trap walls of the trap passages 60'. The functions of the mesh member 30 are explained later.

The trap passage 60' is different from the above-mentioned trap passage which has the upstream portion from the trap wall and the downstream portion therefrom, and has only the downstream portion from the trap wall (the partition wall 28). In the trap passage, the exhaust gas flows into the communicating passage 70' and the exhaust gas flows out from the trap passages 60' after it passes through the trap wall. Accordingly, to make the passage resistance of each trap passage 60' lower than that of each communicating passage 70', the flowing resistance component of each trap passage 60' must be smaller than the flowing resistance component of each communicating passage 70' such that the difference therebetween is larger than the passing resistance component of the each trap wall. This can be realized by the difference between the section areas of the trap passage and of the communicating passage as shown in Figs. 18 and 19. Thus, the particulate trap which uses a part (in the present case, the upstream portion from the trap wall) of the trap passage 60' as the communicating passage does not need to become large in size.

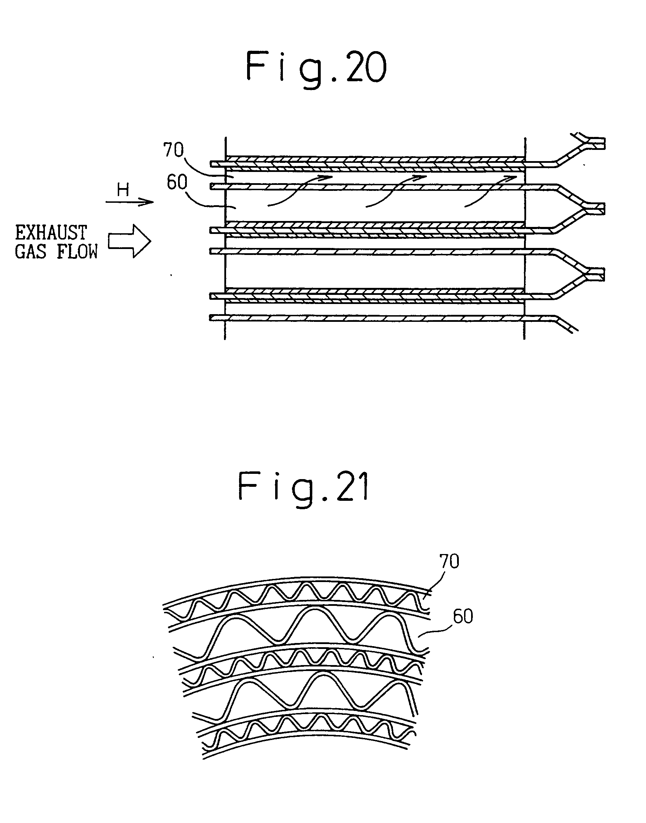

The particulate trap 4 according to another embodiment of the present invention may be a metallic fibers particulate trap as shown in Fig. 20 and Fig. 21 which is a view seen from the arrow (H) in Fig. 20. Fig. 20 is an enlarged partially sectional view of the metallic fiber particulate trap. In the particulate trap, one of the two corrugated plates wound in a spiral manner is a small corrugated plate which has small corrugations, and one surface of one nonwoven sheet and one surface of the other nonwoven sheet are welded each other at the exhaust downstream side, which surfaces bear against the other normal corrugated plate. Thus, the longitudinal spaces formed by the normal corrugated plate become the trap passages 60 and the longitudinal spaces formed by the small corrugated plate become the communicating passages 70 which are adjacent to the trap walls (the metallic fiber nonwoven sheets) of the trap passages 60.

The trap passage 60 has only the upstream portion from the trap wall. In the trap passage, the exhaust gas flows out from the communicating passages 70 after it passes through the trap wall. Accordingly, the flowing resistance components of each trap passage 60 and of each communicating passage 70 are almost equal. To make the passage resistance of each trap passage 60 lower than that of each communicating passage 70, the entrance resistance component of each trap passage 60 must be lower than the entrance resistance component of each communicating passage 70 such that the difference therebetween is larger than the passing resistance component of the each trap wall. This can be realized by the difference between the upstream opening areas of the trap passage and of the communicating passage according to the two corrugated plates as shown in Figs. 20 and 21. Thus, the particulate trap which uses a part (in the present case, the downstream portion from the trap wall) of the trap passage 60 as the communicating passage does not need to become large in size.

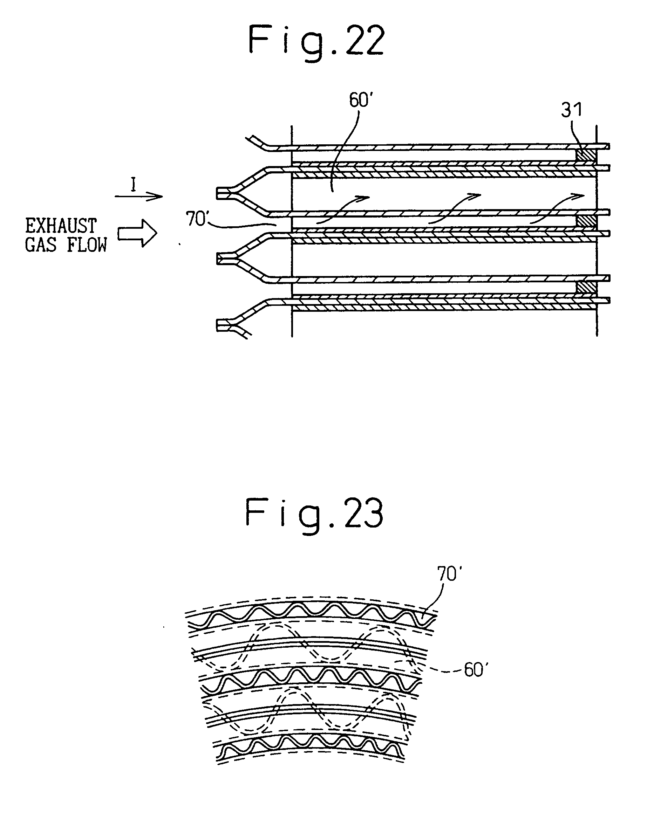

The particulate trap 4 according to another embodiment of the present invention may be a metallic fiber particulate trap as shown in Fig. 22 and Fig. 23 which is a view seen from the arrow (I) in Fig. 22. Fig. 22 is an enlarged partially sectional view of the metallic fibers particulate trap. In the particulate trap, one of the two corrugated plates wound in a spiral manner is a small corrugated plate which has small corrugations similar to the particulate trap shown in Fig. 20, and one surface of one nonwoven sheet and one surface of the other nonwoven sheet are welded each other at the exhaust upstream side, which surfaces bear against the other normal corrugated plate. Thus, the longitudinal spaces formed by the normal corrugated plate become the trap passages 60'.

A spiral mesh member 31 which has very large meshes is arranged between other surfaces of the two nonwoven sheets at the exhaust gas downstream side, which surfaces bear against the small corrugated plate. However, the longitudinal spaces formed by the small corrugated plate become the communicating passages 70' which are adjacent to the trap walls (the metallic fiber nonwoven sheets) of the trap passages 60'. The functions of the mesh member 31 are explained later.

The trap passage 60' is has only the downstream portion from the trap wall. In the trap passage, the exhaust gas flows into the communicating passage 70' and the exhaust gas flows out from the trap passages 60' after it passes through the trap wall. Accordingly, to make the passage resistance of each trap passage 60' lower than that of each communicating passage 70', the flowing resistance component of each trap passage 60' must be lower than the flowing resistance component of each communicating passage 70' such that the difference therebetween is larger than the passing resistance component of the each trap wall. This can be realized by the difference between the section areas of the trap passage and of the communicating passage according to the two corrugated plates as shown in Figs. 22 and 23. Thus, the particulate trap which uses a part (in the present case, the upstream portion from the trap wall) of the trap passage 60' as the communicating passage does not need to become large in size.

In the process of the combustion conducted in an internal combustion engine, not only fuel but also engine oil, which has intruded into cylinders, is burned. Accordingly, oxides and sulfides of calcium and phosphorus, which are components of engine oil, are produced. Usually, particulates contain the thus produced oxides and sulfides. It is very difficult to burn the oxide and sulfide of calcium and phosphorus. Therefore, in the regeneration of the particulate trap, these remain on the trap walls of the particulate trap in the form of ashes. The part of the ashes on the downstream side in the trap wall is easily removed by the exhaust gas passing through the trap wall. However, the part of the ashes on the upstream side in the trap wall is hardly removed by the exhaust gas passing through the trap wall, and deposits thereon. The deposited ashes can not pass through the trap wall. Therefore, the passage resistance of the trap passages is kept high after the regeneration of the particulate trap, so that the exhaust gas continues to flow through the communicating passages, and thus the particulates can not be trapped.

According to the particulate traps shown in Figs. 18 and 22, each trap passage 60 or 60' which is blocked at the exhaust gas upstream side is surely adjacent to the communicating passage 70 or 70' via the trap wall. Accordingly, if the passage resistance of the trap passage is high due to the ashes deposited on the upstream side in the trap wall after the regeneration, the ashes can be removed by the exhaust gas which still flows through the communicating passage which is contact with the upstream side in the trap wall, and can be discharged via the communicating passage. Thus, the above-mentioned problem can be prevented.

On the other hand, when the exhaust gas flows through the communicating passages, the particulates contained in the exhaust gas almost pass therethrough with the exhaust gas. However, a part of the particulates sticks on the inside wall surface of the communicating passage and deposits thereon and becomes agglomerates of the particulates. The agglomerate gets off the inside wall surface when the exhaust gas temperature or the exhaust gas flow rate become relative high. If some agglomerates which are larger than a predetermined size get out of the inside wall surfaces of the communicating passages and are simultaneously discharged therefrom, the concentration of particulate in the exhaust gas becomes very high, and thus the exhaust gas at this time becomes black smoke.

According to the particulate traps shown in Figs. 18 and 22, the mesh member 30 or 31 is arranged at the exhaust gas downstream side of each communicating passage 70 or 70'. The mesh size of the mesh member is sufficient to hold the material which is larger than the predetermined size and such that the ashes which are removed by the exhaust gas pass easily therethrough. Thus, the mesh member does not stop the ashes being discharged via the communicating passages, and can hold the allomerates of the particulates which are larger than the predetermined size. The allomerates held by the mesh member can be burned by the hot exhaust gas in the high engine load and high engine speed operation. Therefore, black smoke is not produced. If such a mesh member is arranged at the exhaust gas downstream side of the trap passages, no problem occurs. Accordingly, instead of the mesh member arranged only in the communicating passages, a mesh member which fully covers the downstream side of the particulate trap can be arranged.

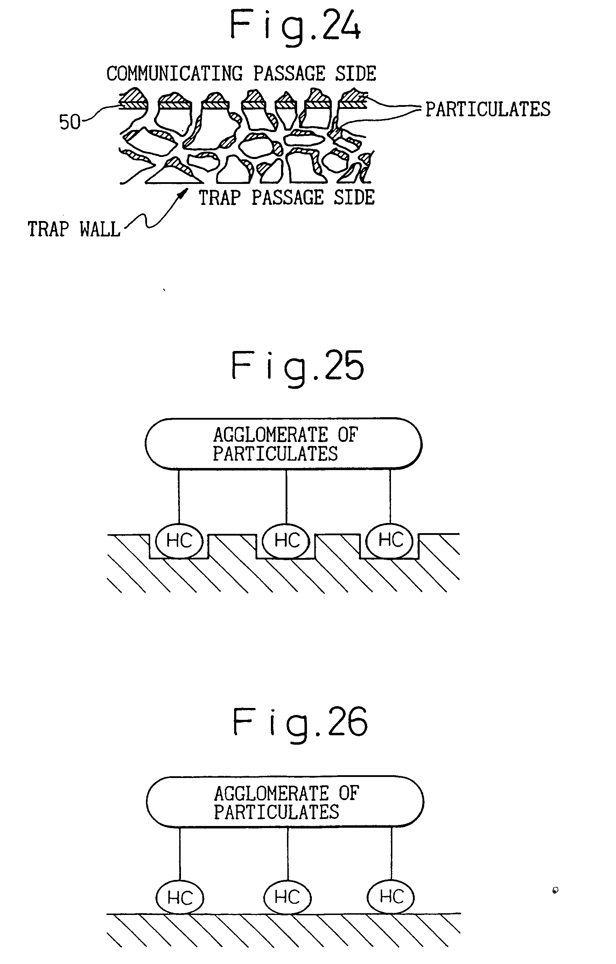

Fig. 24 is an enlarged view of the portion (J) in Fig. 18. As shown in this figure, the particulates are trapped in fine channels of the trap wall. As mentioned above, the communicating passage side surface of the trap wall is the inside surface of the communicating passage. Therefore, the particulates contained in the exhaust gas which flows through the communicating passage stick and deposit thereon and some of the particulates contained in the exhaust gas which passes through the trap wall also stick and deposit thereon.

In the present particulate trap, a hydrocarbon absorbent layer 50, for example zeolite, is formed on the inside wall surfaces of each communicating passage which include the trap wall surfaces, so that the particulates are deposited on the layer 50. It is known that the adhesion between the particulates and between the particulate and the surface of the passage is caused by hydrocarbon binders.

Fig. 26 shows schematically the state in which the agglomerate of particulates adheres directly to the inside wall surface of the communicating passage. When the exhaust gas temperature becomes high, the hydrocarbons around the agglomerate, i.e., the hydrocarbons for holding the agglomerate on the inside wall surface of the communicating passage disappear easily so that the agglomerate leaves the inside wall surface of the communicating passage.

According to the present particulate trap, as shown in Fig. 25, the agglomerate adheres to the hydrocarbon absorbent layer 50. Therefore, the hydrocarbons for holding the agglomerate hardly disappears and thus the agglomerate remains held by the layer, until the exhaust gas temperature becomes very high in the high engine load and high engine speed operation and the agglomerate of particulates starts to burn.

The hydrocarbon absorbent layer 50 not only makes the hydrocarbons hardly disappear, but also functions to increase the force holding the agglomerate. Therefore, when the exhaust gas flow rate increases, the agglomerate hardly leaves and thus the agglomerate can be surely held until the high engine load and high engine speed operation is carried out.

According to the present particulate trap, the agglomerates of the particulates can be surely held until they start to burn, so that it can be surely prevented that the exhaust gas becomes the black smoke. However, if at least one of the mesh member 30 and the hydrocarbon absorbent layer 50 is provided, as a holding means for holding the agglomerates, it is obvious that the black smoke can be produced more hardly than the prior art. The hydrocarbon absorbent layer can be arranged on the inside surfaces of the communicating passages in the metallic fiber particulate trap shown in Fig. 22.

The particulate traps shown Figs. 7, 9, 11, 12, 13, and 15 have the particulate trap means region (p) at the central portion and the communicating means region (q) at the peripheral portion. This is to make the exhaust gas flow easily into the trap passages over the difference between the passage resistances, since the exhaust gas flow velocity at the central portion of the exhaust passage is faster than that at the peripheral portion thereof. However, if the difference between the passage resistances is made sufficient large, the reverse arrangement can be made and the communicating means can be arranged at any portion of the particulate trap.

Referring to each figure, the various features are explained in the various particulate traps which can be used in the second embodiment. A particulate trap can be constructed to have any of these features.

Although the invention has been described with reference to specific embodiments thereof, it should be apparent that numerous modifications can be made thereto, by those skilled in the art, without departing from the basic concept and scope of the invention.

## Claims

1. A device for purifying the exhaust gas of an internal combustion engine comprising: particulate trapping means which have many trap passages (60, 60') for allowing a large amount of exhaust gas to pass therethrough; and communicating means which have many communicating passages (70, 70') for allowing a large amount of exhaust gas to pass therethrough; wherein said each trap passage (60, 60') of said particulate trapping means has a trap wall (28, 28') which extends longitudinally and through which the exhaust gas passes, as at least one of side walls thereof, said particulate trapping means and said communicating means being arranged in parallel in the exhaust passage of said engine, a passage resistance of said each communicating passage (70, 70') being higher than that of said each trap passage (60, 60'),
**characterized in that**
at least one of said trap passages (60, 60') is constructed by one of upstream and downstream portions from said trap wall (28, 28'), at least one of said communicating passages (70, 70') is adjacent to said trap wall (28, 28') of said at least one of trap passages (60, 60') and has said trap wall (28, 28') of said at least one of trap passages (60, 60') as one side wall thereof.

2. A device according to claim 1, wherein said at least one of the trap passages (60, 60') is constructed by said downstream portion from said trap wall (28, 28'), and holding means for holding agglomerates of particulates is arranged in said at least one of the communicating passages (70, 70').

3. A device according to claim 2, wherein said holding means is hydrocarbon absorbent carried on the inside walls of said communicating passage (70, 70').

4. A device according to claim 2, wherein said holding means is a mesh member (30) arranged in the downstream portion of said communicating passage (70, 70'), which member has a mesh size for holding only masses which are larger than a predetermined size.

## Patentansprüche

1. Vorrichtung für das Reinigen eines Abgases eines Verbrennungsmotors mit: Partikelfangeinrichtungen, die viele Fangpassagen (60,60') haben für ein Gestatten, dass eine große Menge von Abgas durch diese hindurchgehen kann; und Verbindungseinrichtungen, die viele Verbindungspassagen (70, 70') haben, für ein Gestatten, dass eine große Menge von Abgas durch sie hindurchgehen kann; wobei jede Fangpassage (60, 60') der Partikelfangeinrichtungen eine Fangwand (28, 28'), die sich Längsrichtung erstreckt und durch die das Abgas hindurchgeht, als wenigstens eine von ihren Seitenwänden hat, wobei die Partikelfangeinrichtungen und die Verbindungseinrichtungen parallel in der Abgaspassage des Verbrennungsmotors angeordnet sind, ein Passagenwiderstand von jeder Verbindungspassage (70, 70') höher ist als der von jeder Fangpassage (60, 60'),
**dadurch gekennzeichnet, dass**
wenigstens eine der Fangpassagen (60, 60') durch einen von stromaufwärtigen und stromabwärtigen Abschnitten von der Fangwand (28, 28') konstruiert ist, und dass wenigstens eine der Verbindungspassagen (70. 70') angrenzend an die Fangwand (28, 28') von wenigstens einer der Fangpassagen (60, 60') ist und die Fangwand (28, 28') von der wenigstens einen der Fangpassagen (60, 60') als eine Seitenwand von sich hat.

2. Vorrichtung gemäß Anspruch 1, wobei die wenigstens eine der Fangpassagen (60, 60') durch den stromabwärtigen Abschnitt von der Fangwand (28, 28') konstruiert ist, und eine Halteeinrichtung für ein Halten von Anhäufungen von Partikeln in der wenigstens einen von den Kommunikationspassagen (70, 70') angeordnet ist:

3. Vorrichtung gemäß Anspruch 2, wobei die Halteeinrichtung ein Kohlenwasserstoffabsorbierelement ist, das an den inneren Wänden der Verbindungspassage (70 70') getragen wird.

4. Vorrichtung gemäß Anspruch 2, wobei die Halteeinrichtung ein Netzelement (30) ist, das in dem stromabwärtigen Abschnitt der Verbindungspassage (70, 70') angeordnet ist, wobei das Element eine Netzgröße hat, nur zum Halten von Massen, die größer sind als eine vorbestimmte Größe.

## Revendications

1. Dispositif de purification des gaz d'échappement d'un moteur à combustion interne comprenant : un moyen de piégeage de matières particulaires qui comporte de nombreux passages de piégeage (60, 60') destinés à permettre qu'une grande quantité de gaz d'échappement passe à travers ceux-ci ; et un moyen de communication qui comporte de nombreux passages de communication (70, 70') destinés à permettre qu'une grande quantité de gaz d'échappement passe à travers ceux-ci ; dans lequel chaque dit passage de piégeage (60, 60') dudit moyen de piégeage de matières particulaires comporte une paroi de piégeage (28, 28') qui s'étend longitudinalement et à travers laquelle les gaz d'échappement passent, en tant qu'au moins l'une des parois latérales de ceux-ci, ledit moyen de piégeage de matières particulaires et ledit moyen de communication étant disposés en parallèle dans le passage d'échappement dudit moteur, une résistance de passage de chaque dit passage de communication (70, 70') étant supérieure à celle de chaque dit passage de piégeage (60, 60'),
**caractérisé en ce que**
au moins l'un desdits passages de piégeage (60, 60') est construit par l'une des parties en amont et en aval depuis ladite paroi de piégeage (28, 28'), au moins l'un desdits passages de communication (70, 70') est adjacent à ladite paroi de piégeage (28, 28') dudit au moins un des passages de piégeage (60, 60') et comporte ladite paroi de piégeage (28, 28') dudit au moins un des passages de piégeage (60, 60') en tant que paroi latérale de ceux-ci.

2. Dispositif selon la revendication 1, dans lequel ledit au moins un des passages de piégeage (60, 60') est construit par ladite partie en aval de ladite paroi de piégeage (28, 28'), et un moyen de maintien destiné à maintenir les agglomérats de matières particulaires est disposé dans ledit au moins l'un des passages de communication (70, 70').

3. Dispositif selon la revendication 2, dans lequel ledit moyen de maintien est un absorbant d'hydrocarbures supporté sur les parois internes dudit passage de communication (70, 70').

4. Dispositif selon la revendication 2, dans lequel ledit moyen de maintien est un élément de maille (30) disposé dans la partie en aval dudit passage de communication (70, 70'), chaque élément présentant une dimension de maille destinée à maintenir seulement les masses qui sont supérieures à une taille prédéterminée.
